# EUROPÄISCHE PATENTSCHRIFT

(11) **EP 3 345 749 B1**
(45) Veröffentlichungstag und Bekanntmachung des Hinweises auf die Patenterteilung: **22.05.2019**
(21) Anmeldenummer: 17150840.1
(22) Anmeldetag: 10.01.2017
(51) Int. Cl.: B29C 70/32, B29C 70/02, B29C 65/50, B29C 65/00, F16L 9/128, B32B 1/08

(54) **THERMOPLASTISCHES COMPOSITROHR MIT MEHRSCHICHTIGER ZWISCHENLAGE**
THERMOPLASTIC COMPOSITE PIPE WITH MULTILAYERED INTERMEDIATE LAYER
TUYAU COMPOSITE THERMOPLASTIQUE COMPRENANT UNE COUCHE INTERMÉDIAIRE MULTICOUCHE

(43) Veröffentlichungstag der Anmeldung: 11.07.2018
(73) Patentinhaber: Evonik Degussa GmbH, 45128 Essen (DE)
(72) Erfinder: BERGER, Jasmin, 44141 Dortmund (DE); RIES, Hans, 45772 Marl (DE); FRANOSCH, Jürgen, 45770 Marl (DE); GÖRING, Rainer, 46325 Borken (DE); BEYER, Horst, 45770 Marl (DE)

(56) Entgegenhaltungen:
- EP-A1- 0 685 674
- WO-A1-95/07428

## Beschreibung

Gegenstand der Erfindung ist ein flexibles, faserverstärktes Compositrohr, das einen Innenliner (im Folgenden auch kurz "Liner" genannt), mehrere aus Tapelagen gebildete Compositschichten sowie eine zwischen unterschiedlichen Compositschichten angeordnete, diese verbindende ein- oder mehrschichtige Zwischenlage enthält, sowie ein Verfahren zu dessen Herstellung. Das Material des Innenliners, die Matrix der Tapelagen sowie die Polymere der Zwischenlage sind thermoplastisch. Das erfindungsgemäße Compositrohr wird für die Öl- und Gasförderung eingesetzt, insbesondere für die Offshore-Förderung von Öl oder Gas, als Riser, als Umbilical, für den Transport des geförderten Öls oder Gases über den Meeresboden vom Bohrloch zum Riser oder für den Transport an Land.

Im Stand der Technik werden für diesen Anwendungsbereich sehr häufig sogenannte Unbonded Flexible Pipes verwendet. Derartige Rohre enthalten eine innere Auskleidung, üblicherweise in Form eines Kunststoffrohres, als Barriere gegen den Austritt des beförderten Fluids, sowie eine oder mehrere Armierungsschichten auf der Außenseite dieser inneren Auskleidung. Das Unbonded Flexible Pipe kann zusätzliche Schichten enthalten, beispielsweise eine oder mehrere Armierungsschichten auf der Innenseite der inneren Auskleidung, um das Zusammenfallen der inneren Auskleidung bei hohem Außendruck zu verhindern. Eine derartige innere Armierung wird üblicherweise als Karkasse bezeichnet. Darüber hinaus kann eine äußere Umhüllung enthalten sein, um eine Barriere gegen das Eindringen von Flüssigkeit aus der äußeren Umgebung in die Armierungsschichten oder weitere innen liegende polymere oder metallische Funktionsschichten vorzusehen sowie als Schutz gegen äußere mechanische Belastungen.

Typische Unbonded Flexible Pipes sind beispielsweise in der WO 01/61232, der US 6 123 114 und der US 6 085 799 beschrieben; sie sind darüber hinaus in API Recommended Practice 17B, "Recommended Practice for Flexible Pipe", 3. Auflage, März 2002 sowie in API Specification 17J, "Specification for Unbonded Flexible Pipe", 2. Auflage, November 1999 näher charakterisiert.

Der Ausdruck "unbonded" bedeutet in diesem Zusammenhang, dass mindestens zwei der Schichten, einschließlich Armierungsschichten und Kunststoffschichten, nicht haftend miteinander verbunden sind. In der Praxis enthält das Rohr mindestens drei Armierungsschichten, die über die Rohrlänge hinweg weder direkt noch indirekt, d. h. über weitere Schichten, miteinander verbunden sind. Dadurch wird das Rohr biegsam und ausreichend flexibel, um es für Transportzwecke aufzurollen.

In herkömmlichen Unbonded Flexible Pipes bestehen die Armierungsschicht oder die Armierungsschichten meistens aus spiralförmig angeordneten Stahldrähten, Stahlprofilen oder Stahlbänden, wobei die einzelnen Schichten mit verschiedenen Windungswinkeln relativ zur Rohrachse ausgebildet sein können (Zugarmierung) sowie einer primär in Umfangsrichtung gewickelten Druckarmierung. Bei solchen Unbonded Flexible Pipes ist der Stahlanteil den korrosiven Einflüssen des geförderten Mediums ausgesetzt. Wegen der daraus resultierenden Materialwahl sowie der aufwendigen Konstruktion sind derartige Rohre verhältnismäßig teuer. Das hohe Eigengewicht ist insbesondere bei längeren Risern für die Offshore-Ölförderung in der Tiefsee sehr nachteilig.

Seit einiger Zeit werden Entwicklungen beschrieben, bei denen thermoplastische Compositrohre, auch Thermoplastic Composite Pipes genannt, zur Anwendung kommen. Dies sind Rohre, die als Innenlage einen ein- oder mehrschichtigen Innenliner aus thermoplastischem Material aufweisen. Auf diesen wird, stoffschlüssig verbunden oder in manchen Fällen auch unverbunden, eine Composit-Lage zum Beispiel durch Aufwickeln unidirektional faserverstärkter Tapes aufgebracht. Derartige Compositrohre werden beispielweise in der WO 95/07428 und der WO 99/67561 offenbart. Ihre Herstellung wird darüber hinaus in der WO 02/095281, der WO 2006/107196, der WO 2012/118378, der WO 2012/118379 und der WO 2013/188644 beschrieben.

Bei diesen Compositrohren ist es ein generelles Problem, dass die Haftung zwischen einer faserreichen Tapelage und der angrenzenden Oberfläche bei suboptimaler Materialkombination nicht ausreichend ist, um die Beanspruchungen bei der Installation und im Betrieb insbesondere in Offshore-Anwendungen, wie die Anbindungen an Fittings oder die Montage mit Greifvorrichtungen, sowie die harten Testbedingungen, denen derartige Konstruktionen unterworfen werden, zu überstehen. Beispielhaft sei hier die Ablösung von Schichten im Rapid Gas Decompression Test oder bei Einwirkung starker Biegekräfte genannt. Im Stand der Technik wird daher vorzugsweise angestrebt, für die Tapematrix und eine angrenzende Oberfläche, beispielsweise die Außenoberfläche des Innenliners, artgleiches Polymer einzusetzen (hierzu etwa "Thermoplastic Composite Pipe: An Analysis And Testing Of A Novel Pipe System For Oil & Gas"; Vortrag von J.L.C.G. de Kanter und J. Leijten auf dem Kongress ICCM 17 in Edinburgh, UK, 2009)

Bei Thermoplastic Composite Pipes mit einwandigen Linern kommen im niedrigen Temperaturbereich (bis ca. 50 °C Dauertemperatur) Linerrohre aus Polyethylen zum Einsatz, bei höheren Temperaturen bis ca. 80 °C Linerrohre aus Polyamiden wie PA11 oder PA12. Bei noch höheren Temperaturen werden hochpreisige Werkstoffe wie Polyvinylidendifluorid (PVDF) oder sogar Polyetheretherketon (PEEK) eingesetzt. Unter Berücksichtigung der Anforderungen an Chemikalien-, Alterungs- und Temperaturbeständigkeit können in vielen Fällen Composites mit einer Matrix aus PA11 oder PA12 eingesetzt werden. Häufig erweist es sich als zweckmäßig, die Compositlage aus unterschiedlichen Compositschichten aufzubauen, wobei die unterschiedlichen Compositschichten jeweils eine Matrix auf Basis unterschiedlicher Polymerer besitzen. So kann in vielen Fällen die Matrix der nach außen angeordneten Compositschicht auf einem Polymeren basieren, das billiger ist oder das eine erhöhte Flexibilität aufweist. Dies ist möglich, da der äußere Bereich der Rohrwandung geringeren Anforderungen im Hinblick auf Temperaturbeständigkeit, Beständigkeit gegenüber dem zu fördernden Medium sowie Diffusionssperrwirkung unterliegt. Allgemein stellt sich aber bei der Kombination ungleicher Materialien die Frage, wie die nötige Haftung zwischen unterschiedlichen Compositschichten erzielt werden soll.

Der Fachmann weiß, dass der Verbund von zwei verschiedenen Thermoplastschichten miteinander entweder über Materialverträglichkeit oder über chemische Reaktionen erfolgen kann. Materialverträglichkeit ist im Idealfall dann gegeben, wenn es sich um das gleiche Polymer handelt. Aus den Erfahrungen bei der Mehrschichtrohrentwicklung und beim Mehrkomponentenspritzgießen ist bekannt, dass chemische Bindungen recht gut unter erhöhter Temperatur und Verweilzeit realisiert werden können, wenn Schmelze auf Schmelze gelegt wird, beispielsweise bei der Coextrusion. Eine gute Haftung der gleichen Materialkombination ist aber ungleich schwerer zu realisieren, wenn erst durch eine heiße Schmelze eine erstarrte Oberfläche angeschmolzen werden muss und nur wenig Zeit für eine chemische Reaktion zur Verfügung steht. Selbst bei artgleichen Polymeren kann eine so hergestellte Verbindung eine unzureichende Festigkeit haben. Ein besserer Verbund kommt zustande, wenn die beiden Verbundpartner an ihrer Oberfläche vor dem Fügen angeschmolzen und dann aufeinander gepresst werden. Allerdings ist auch hierbei die Zeit für eine chemische Reaktion kurz, so dass Verbindungen zwischen gleichartigen Polymeren in der Regel eine bessere Haftung haben als Verbunde, die durch eine chemische Reaktion oder über Werkstoffkompatibilität (also durch Diffusionsprozesse) realisiert werden müssen.

Die Aufgabe der Erfindung ist es, ein Verfahren zur Herstellung eines Thermoplastic Composite Pipes zur Verfügung zu stellen, mit dem einerseits hohe Freiheitsgrade bei der Materialkombination von Liner, Tapematrix der ersten Compositschicht und Tapematrix der nachfolgenden Compositschicht erzielt werden, und das andererseits eine sehr gute Haftung an den kritischen Schichtgrenzen ergibt.

Die zugrundeliegende Aufgabe wird dadurch gelöst, dass Tapelagen auf Basis unterschiedlicher Polymerer in der Weise miteinander verbunden werden, dass eine Folie hergestellt wird, deren eine Oberfläche das Polymer B der ersten Compositschicht und deren andere Oberfläche das Polymer C der nachfolgenden Compositschicht enthält. Die Folie wird dann unter Wärmeaufbringung mit der ersten Compositschicht und in einem weiteren Schritt unter Wärmeaufbringung mit der ersten Tapelage der nachfolgenden Compositschicht verbunden.

Gegenstand der Erfindung ist somit ein Verfahren zur Herstellung eines Thermoplastic Composite Pipes, das folgende Schritte enthält:
a) ein rohrförmiger Liner mit einer Wandung, die im Bereich der äußeren Oberfläche ein thermoplastisches Polymer A enthält, wird bereitgestellt;
b) ein Tape, das Verstärkungsfasern in einer Matrix enthält, welche ein thermoplastisches Polymer B enthält, wird bereitgestellt;
c) ein Tape, das Verstärkungsfasern in einer Matrix enthält, welche ein thermoplastisches Polymer C enthält, wird bereitgestellt; wobei Polymer A und Polymer B gleich oder unterschiedlich sind und Polymer B und Polymer C unterschiedlich sind,
d) auf den rohrförmigen Liner wird ein unter Schritt b) bereitgestelltes Tape mittels Verschweißen aufgebracht,
e) gegebenenfalls werden auf die im Schritt d) aufgebrachte Tapelage weitere Tapelagen gleicher Art stoffschlüssig aufgebracht,
f) auf die so gebildete erste Compositschicht wird eine Folie oder ein im Schritt g) hergestellter Verbund aus einer Folie und einem unter Schritt c) bereitgestellten Tape aufgebracht, wobei entweder vorher, gleichzeitig oder anschließend die äußere Oberfläche der ersten Compositschicht sowie die Kontaktoberfläche der Folie geschmolzen wird, wobei die Region der Kontaktoberfläche der Folie aus einer Formmasse besteht, die zu mindestens 30 Gew.-%, vorzugsweise zu mindestens 40 Gew.-%, besonders bevorzugt zu mindestens 50 Gew.-%, insbesondere bevorzugt zu mindestens 60 Gew.-% und ganz besonders bevorzugt zu mindestens 70 Gew.-% Polymer B enthält, und wobei die Region der gegenüberliegenden (äußeren) Oberfläche der Folie aus einer Formmasse besteht, die zu mindestens 30 Gew.-%, vorzugsweise zu mindestens 40 Gew.-%, besonders bevorzugt zu mindestens 50 Gew.-%, insbesondere bevorzugt zu mindestens 60 Gew.-% und ganz besonders bevorzugt zu mindestens 70 Gew.-% Polymer C enthält;
g) auf die äußere Oberfläche der Folie wird das unter Schritt c) bereitgestellte Tape aufgebracht, wobei entweder vorher, gleichzeitig oder anschließend die äußere Oberfläche der aufgebrachten Folie sowie die Kontaktoberfläche des Tapes geschmolzen wird;
h) gegebenenfalls werden auf die im Schritt g) aufgebrachte Tapelage weitere Tapelagen gleicher Art stoffschlüssig aufgebracht,
wobei in den Schritten g) und gegebenenfalls h) die zweite Compositschicht erzeugt wird,
i) gegebenenfalls wird zum Abschluss eine außenliegende Decklage aus einer polymeren Masse aufgebracht.

In einer ersten Ausführungsform sind das Polymer A und das Polymer B gleich. In diesem Fall wird im Schritt d) das Tape direkt auf die äußere Oberfläche des Liners aufgebracht, wobei entweder vorher, gleichzeitig oder anschließend die äußere Oberfläche des Liners sowie die Kontaktoberfläche des Tapes geschmolzen wird.

In einer zweiten Ausführungsform sind das Polymer A und das Polymer B unterschiedlich. In diesem Fall werden Tape und Liner in der Weise miteinander verbunden, dass eine Folie hergestellt wird, deren eine Oberfläche das Polymer A der Lineroberfläche und deren andere Oberfläche das Polymer B der Tapematrix enthält. Die Folie wird dann unter Wärmeaufbringung mit dem Liner und in einem weiteren Schritt unter Wärmeaufbringung mit der ersten Tapelage verbunden. Es wird also das gleiche Konzept wie bei der Verbindung unterschiedlicher Compositschichten verwendet. Der Schritt d) besteht hier also aus folgenden Teilschritten:
d1) auf den rohrförmigen Liner wird eine Folie oder ein im Schritt d2) hergestellter Verbund aus einer Folie und einem unter Schritt b) bereitgestellten Tape aufgebracht, wobei entweder vorher, gleichzeitig oder anschließend die äußere Oberfläche des Liners sowie die Kontaktoberfläche der Folie geschmolzen wird, wobei die Region der Kontaktoberfläche der Folie aus einer Formmasse besteht, die zu mindestens 30 Gew.-%, vorzugsweise zu mindestens 40 Gew.-%, besonders bevorzugt zu mindestens 50 Gew.-%, insbesondere bevorzugt zu mindestens 60 Gew.-% und ganz besonders bevorzugt zu mindestens 70 Gew.-% Polymer A enthält, und wobei die Region der gegenüberliegenden (äußeren) Oberfläche der Folie aus einer Formmasse besteht, die zu mindestens 30 Gew.-%, vorzugsweise zu mindestens 40 Gew.-%, besonders bevorzugt zu mindestens 50 Gew.-%, insbesondere bevorzugt zu mindestens 60 Gew.-% und ganz besonders bevorzugt zu mindestens 70 Gew.-% Polymer B enthält;
d2) auf die äußere Oberfläche der Folie wird das unter Schritt b) bereitgestellte Tape aufgebracht, wobei entweder vorher, gleichzeitig oder anschließend die äußere Oberfläche der aufgebrachten Folie sowie die Kontaktoberfläche des Tapes geschmolzen wird.

Die Erfindung soll im Folgenden näher erläutert werden, wobei sich diese Erläuterungen, sofern nichts anderes angegeben ist, ausdrücklich gleichermaßen auf die erste und die zweite Ausführungsform beziehen.

Der rohrförmige Liner besitzt in der Regel einen Innendurchmesser im Bereich von 15 bis 400 mm, vorzugsweise im Bereich von 20 bis 300 mm und besonders bevorzugt im Bereich von 25 bis 255 mm. Seine Wandstärke liegt in der Regel im Bereich von 2 bis 40 mm, vorzugsweise im Bereich von 2,5 bis 30 mm und besonders bevorzugt im Bereich von 3 bis 20 mm. Der Liner kann einschichtig oder mehrschichtig sein. Wenn er einschichtig ist, besteht er aus einer Formmasse, die mindestens 30 Gew.-%, vorzugsweise mindestens 40 Gew.-%, besonders bevorzugt mindestens 50 Gew.-%, ganz besonders bevorzugt mindestens 60 Gew.-% und insbesondere bevorzugt mindestens 70 Gew.-%, mindestens 80 Gew.-% oder mindestens 85 Gew.-% des Polymers A enthält, jeweils bezogen auf die gesamte Formmasse. Wenn der Liner mehrschichtig ist, so besteht die äußere Schicht aus dieser Formmasse; die innere Schicht kann aus einer Formmasse bestehen, die beispielsweise eine Sperrwirkung oder eine chemische Schutzfunktion gegenüber Komponenten des zu fördernden Mediums besitzt. Innere und äußere Schichten können durch eine Haftvermittlerschicht miteinander verbunden sein.

Das Polymer A kann beispielsweise ein Polyolefin, ein Polyamid, ein Polyphthalamid (PPA), ein Polyethylennaphthalat, ein Polybutylennaphthalat, ein Fluorpolymer, ein Polyphenylensulfid (PPS), ein Polyethersulfon, ein Polyphenylsulfon (PPSU) oder ein Polyarylenetherketon wie PEEK oder PEK sein. In einer bevorzugten Ausführungsform enthält die Formmasse des einschichtigen Liners beziehungsweise die Formmasse der Außenschicht eines mehrschichtigen Liners neben dem Polymer A kein weiteres Polymer.

Die in den Schritten b) und c) bereitgestellten Tapes enthalten Verstärkungsfasern. Dies können beispielsweise Glasfasern, Carbonfasern, Aramidfasern, Borfasern, keramische Fasern (z. B. aus Al₂O₃ oder SiO₂), Basaltfasern, Siliciumcarbidfasern, Polyamidfasern, Polyesterfasern, Fasern aus flüssigkristallinem Polyester, Polyacrylnitrilfasern sowie Fasern aus Polyimid, Polyetherimid, Polyphenylensulfid, Polyetherketon oder Polyetheretherketon sein. Hierbei sind Glasfasern, Carbonfasern, Aramidfasern und Basaltfasern bevorzugt. Der Querschnitt der Fasern kann beispielsweise kreisförmig, rechteckig, oval, elliptisch oder kokonförmig sein. Mit Fasern, deren Querschnitt von der Kreisform abweicht (beispielsweise Flachglasfasern), kann ein höherer Faserfüllgrad im Fertigteil und damit eine höhere Festigkeit erzielt werden. Die Fasern können als Kurzfasern oder Langfasern eingesetzt werden oder vorzugsweise als Endlosfasern, etwa in Form eines Gewebes oder besonders bevorzugt als unidirektionale Faserlage.

Der Volumenanteil der Verstärkungsfasern im Tape beträgt in der Regel 10 bis 85 %, vorzugsweise 15 bis 80 %, besonders bevorzugt 20 bis 75 % und insbesondere bevorzugt 25 bis 70 %.

Bei den in den Schritten b) beziehungsweise c) bereitgestellten Tapes können die Art der Verstärkungsfasern sowie ihr Volumenanteil unterschiedlich sein.

Die Matrix dieser Tapes besteht jeweils aus einer Formmasse, die mindestens 30 Gew.-%, vorzugsweise mindestens 40 Gew.-%, besonders bevorzugt mindestens 50 Gew.-%, ganz besonders bevorzugt mindestens 60 Gew.-% und insbesondere bevorzugt mindestens 70 Gew.-%, mindestens 80 Gew.-% oder mindestens 85 Gew.-% des Polymers B beziehungsweise des Polymers C enthält, jeweils bezogen auf die gesamte Formmasse. Das Polymer B beziehungsweise das Polymer C kann beispielsweise ein Polyolefin, ein Polyamid, ein Polyphthalamid (PPA), ein Polyethylennaphthalat, ein Polybutylennaphthalat, ein Fluorpolymer, ein Polyphenylensulfid (PPS), ein Polyethersulfon, ein Polyphenylsulfon (PPSU) oder ein Polyarylenetherketon wie PEEK oder PEK sein. Polymer B und Polymer C sind unterschiedlich. Hiermit ist gemeint, dass sie sich von der chemischen Zusammensetzung her unterscheiden; Unterschiede im Molekulargewicht, im Verzweigungsgrad oder in den Endgruppen sind unbeachtlich. Gleiches gilt in der zweiten Ausführungsform für die Unterschiedlichkeit von Polymer A und Polymer B.

Die Tapes können nach jeder Methode des Standes der Technik hergestellt werden. Die Herstellung unidirektional endlosfaserverstärkter Tapes wird beispielsweise in der EP 0 056 703 A1, der EP 0 364 829 A2, der US 4 883 625, der WO 2012/149129, der WO 2013/188644 und der WO 2014/140025 näher beschrieben. Mögliche Herstellungsmethoden sind beispielsweise Schmelzeauftrag, Imprägnieren mit einer Polymerlösung und Entfernen des Lösemittels, Folienimprägnierung oder Pulverimprägnierung.

Üblicherweise hat das verwendete Tape eine Breite von 5 bis 500 mm und vorzugsweise eine Breite von 8 bis 200 mm, während die Dicke üblicherweise im Bereich von 0,1 bis 1 mm, vorzugsweise im Bereich von 0,1 bis 0,5 mm und besonders bevorzugt im Bereich von 0,15 bis 0,35 mm liegt. Die gesamte Compositlage, also die Summe aller Tapelagen beziehungsweise Compositschichten liegt hierbei im Bereich von 1 bis 100 mm, vorzugsweise im Bereich von 5 bis 90 mm und besonders bevorzugt im Bereich von 10 bis 80 mm. Für unterschiedliche Tapelagen können unterschiedliche Tapegeometrien eingesetzt werden. Die verwendeten Tapes können jeden geeigneten Querschnitt besitzen. Darüber hinaus können für unterschiedliche Tapelagen unterschiedliche Verstärkungsfasern eingesetzt werden.

Die für Polymer A, Polymer B und Polymer C beispielhaft genannten Polymere sind dem Fachmann wohlbekannt und in einer Vielzahl von Handelstypen kommerziell erhältlich, weshalb eine nähere Beschreibung überflüssig ist. Als Polyolefin kommen beispielsweise Polypropylen, Polyethylen oder vernetztes Polyethylen in Frage. Geeignete Polyamide sind beispielsweise PA6, PA66, PA610, PA88, PA8, PA612, PA810, PA108, PA9, PA613, PA614, PA812, PA128, PA1010, PA10, PA814, PA148, PA1012, PA11, PA1014, PA1212 und PA12 oder ein auf einem dieser Polyamide basierendes Polyetheramid oder Polyetheresteramid. Das Polyphthalamid kann beispielsweise PA66/6T, PA6/6T, PA6T/MPMDT (MPMD steht für 2-Methylpentamethylendiamin), PA9T, PA10T, PA11T, PA12T, PA14T, PA6T/61, PA6T/10T, PA6T/12, PA10T/11, PA10T/12 oder PA612/6T sein. Als Fluorpolymer sind beispielsweise Polyvinylidenfluorid (PVDF), Ethylen-Tetrafluorethylen-Copolymer (ETFE), ein mit Hilfe einer Terkomponente wie beispielsweise Propen, Hexafluorpropen, Vinylfluorid oder Vinylidenfluorid modifiziertes ETFE (beispielsweise EFEP), Ethylen-Chlortrifluorethylen-Copolymer (E-CTFE), Polychlortrifluorethylen (PCTFE), Chlortrifluorethylen-Perfluoralkylvinylether-Tetrafluorethylen-Copolymer (CPT), Tetrafluorethylen-Hexafluorpropen-Vinylidenfluorid-Copolymer (THV), Tetrafluorethylen-Hexafluorpropen-Copolymer (FEP) oder Tetrafluorethylen-Perfluoralkylvinylether-Copolymer (PFA) geeignet. In Frage kommen hier auch Copolymere auf Basis von Vinylidenfluorid, die bis zu 40 Gew.-% andere Monomere aufweisen wie beispielsweise Trifluorethylen, Chlortrifluorethylen, Ethylen, Propen und Hexafluorpropen.

Die erfindungsgemäß eingesetzten Formmassen können neben Polymer A beziehungsweise Polymer B beziehungsweise Polymer C gegebenenfalls weitere Polymere sowie übliche Hilfs- oder Zusatzstoffe enthalten. In einer bevorzugten Ausführungsform enthält die Formmasse des Liners neben Polymer A keine weiteren Polymeren. In einer weiteren bevorzugten Ausführungsform enthalten die Formmassen sowohl des Liners als auch der Tapes der ersten Compositschicht neben Polymer A beziehungsweise Polymer B keine weiteren Polymeren.

Die im Schritt f) aufgebrachte Folie ist in einer ersten Ausführungsform eine Einschichtfolie und in einer zweiten Ausführungsform eine Mehrschichtfolie.

Bei der ersten Ausführungsform besteht der Thermoplastanteil der Folie aus einer Formmasse, die mindestens 30 Gew.-%, vorzugsweise mindestens 35 Gew.-% und besonders bevorzugt mindestens 40 Gew.-% an Polymer B sowie mindestens 30 Gew.-%, vorzugsweise mindestens 35 Gew.-% und besonders bevorzugt mindestens 40 Gew.-% an Polymer C enthält, jeweils bezogen auf die gesamte Formmasse. Da die Polymere B und C unterschiedlich sind, sind sie miteinander in der Regel nicht verträglich. Die Formmasse muss in diesem Fall entweder einen Verträglichkeitsvermittler enthalten, oder die beiden Polymere B und C sind zumindest teilweise über chemische Reaktionen miteinander verknüpft.

Ein Beispiel für eine Formmasse mit Verträglichkeitsvermittler ist eine Formmasse, die zu mindestens 30 Gew.-% ein Polyamid wie PA11 oder PA12, zu mindestens 30 Gew.-% ein Fluorpolymer wie PVDF sowie eine wirksame Menge eines Acrylatcopolymers enthält. Geeignete Acrylatcopolymere sind beispielsweise in der EP 0 673 762 A2 offenbart. Vom Acrylatcopolymer kann in der Formmasse beispielsweise 0,1 bis 10 Gew.-% enthalten sein; bei der Herstellung der Formmasse ist es zweckmäßig, das Fluorpolymer und das Acrylatcopolymer in der Schmelze vorzumischen.

Ein Beispiel für eine Formmasse mit chemischer Verknüpfung ist eine Formmasse, die zu mindestens 30 Gew.-% ein Polyamid wie PA11 oder PA12 und zu mindestens 30 Gew.-% ein semiaromatisches Polyamid beziehungsweise Polyphthalamid (PPA) wie PA6T/6, PA6T/66, PA6T/6I, PA6T/10T oder PA6T/12 enthält. Beim Schmelzemischen treten hier aufgrund der hohen Temperaturen Umamidierungsreaktionen ein, so dass Blockcopolymere mit PA11- oder PA12-Blöcken und PPA-Blöcken entstehen. Diese wirken als Verträglichkeitsvermittler zwischen den beiden Komponenten.

Bei der zweiten Ausführungsform besteht die Mehrschichtfolie im einfachsten Fall aus zwei Schichten. Vorzugsweise besteht sie aus drei Schichten. Sie kann aber auch aus vier, fünf oder noch mehr Schichten bestehen. Die Zahl der Schichten ist nach oben hin nur dadurch begrenzt, das es nicht praktikabel ist, unbegrenzt dünne Schichten zu extrudieren. Aus Gründen der Praktikabilität liegt die Obergrenze daher bei 9 Schichten und vorzugsweise bei 7 Schichten.

Beispiele für zweischichtige Folien sind:
- Zur ersten Compositschicht orientierte Schicht aus einer Formmasse, die 50 bis 80 Gew.-% Polymer B und 20 bis 50 Gew.-% Polymer C enthält sowie zur zweiten Compositschicht orientierte Schicht aus einer Formmasse, die 50 bis 80 Gew.-% Polymer C und 20 bis 50 Gew.-% Polymer B enthält. Die beiden Formmassen enthalten zweckmäßigerweise noch 0,1 bis 10 Gew.-% eines Verträglichkeitsvermittlers. Die Prozentangaben sind hierbei wie bei den folgenden Beispielen auf die gesamte Formmasse der jeweiligen Schicht bezogen.

- Bei einer ersten Compositschicht mit einer äußeren PVDF-Oberfläche besteht die zur ersten Compositschicht orientierte Schicht der Folie aus einer Formmasse, die mindestens 30 Gew.-% PVDF und 2,5 bis 50 Gew.-% des in der EP 0 673 762 A2 offenbarten Acrylatcopolymers enthält; die zur zweiten Compositschicht hin orientierte Schicht besteht zu mindestens 50 Gew.-% aus dem gleichen Polyamid wie die Matrix der zweiten Compositschicht, beispielsweise PA11 oder PA12.
- Bei einer ersten Compositschicht mit einer äußeren PPA-Oberfläche besteht die zur ersten Compositschicht orientierte Schicht der Folie aus einer Formmasse, die mindestens 40 Gew.-% des gleichen PPA enthält; die zur zweiten Compositschicht hin orientierte Schicht besteht zu mindestens 50 Gew.-% aus dem gleichen Polyamid wie die Matrix der zweiten Compositschicht, beispielsweise PA11 oder PA12. Beide Formmassen können darüber hinaus 0,1 bis 25 Gew.-% eines säureanhydridgruppenhaltigen polyolefinischen Schlagzähmodifiers enthalten.
- Bei einer ersten Compositschicht mit einer äußeren PPS-Oberfläche besteht die zur ersten Compositschicht orientierte Schicht der Folie aus einer Formmasse, die mindestens 50 Gew.-% PPS sowie 3 bis 30 Gew.-% eines säureanhydridgruppenhaltigen polyolefinischen Schlagzähmodifiers enthält, der auch Acrylatbausteine enthalten kann (Handelsname z. B. LOTADER®); die zur zweiten Compositschicht hin orientierte Schicht besteht zu mindestens 50 Gew.-% aus dem gleichen Polyamid wie die Matrix der zweiten Compositschicht, beispielsweise PA11 oder PA12.
- Bei einer ersten Compositschicht mit einer äußeren PA11- oder PA12-Oberfläche besteht die zur ersten Compositschicht orientierte Schicht der Folie aus einer Formmasse, die zu mindestens 40 Gew.-% das gleiche Polyamid sowie 30 bis 60 Gew.-% eines säureanhydridgruppenhaltigen Polypropylens oder Polyethylens enthält; die zur zweiten Compositschicht hin orientierte Schicht besteht zu mindestens 50 Gew.-% aus dem gleichen Polypropylen oder Polyethylen wie die Matrix der zweiten Compositschicht.
- Bei einer ersten Compositschicht mit einer äußeren PEEK-Oberfläche besteht die zur ersten Compositschicht orientierte Schicht der Folie aus einer Formmasse, die zu mindestens 30 Gew.-% PEEK und zu 20 bis 70 Gew.-% ein Polyimid oder Polyetherimid enthält; die zur zweiten Compositschicht hin orientierte Schicht besteht zu mindestens 50 Gew.-% aus dem gleichen PPA wie die Matrix der zweiten Compositschicht, wobei das PPA dieser Schicht vorzugsweise einen Überschuss an Aminoendgruppen zur Haftungsverbesserung enthält. Das PPA der zweiten Compositschicht kann sich im Endgruppengehalt hiervon unterscheiden.

Beispiele für dreischichtige Folien sind:
- Zur ersten Compositschicht orientierte Schicht aus einer Formmasse, die mindestens 40 Gew.-% Polymer B enthält. Daran schließt sich eine Haftvermittlerschicht aus einer Formmasse an, die mindestens 30 Gew.-% Polymer B, mindestens 30 Gew.-% Polymer C sowie gegebenenfalls 0,1 bis 20 Gew.-% Verträglichkeitsvermittler enthält. Die zur zweiten Compositschicht hin orientierte Schicht enthält zu mindestens 40 Gew.-% Polymer C.
- Bei einer ersten Compositschicht mit einer äußeren PVDF-Oberfläche besteht die zur ersten Compositschicht orientierte Schicht der Folie aus einer Formmasse, die mindestens 30 Gew.-% und bevorzugt mindestens 50 Gew.-% PVDF enthält. Daran schließt sich eine Haftvermittlerschicht aus einem Acrylatcopolymer gemäß EP 0 673 762 A2 oder aus einer Polyamid/Acrylatcopolymermischung gemäß EP 0 618 390 A1 an. Die zur zweiten Compositschicht hin orientierte Schicht besteht zu mindestens 50 Gew.-% aus dem gleichen Polyamid wie die Matrix der zweiten Compositschicht, genauso wie das Polyamid der Haftvermittlerschicht; Beispiele hierfür sind PA11 oder PA12.
- Bei einer ersten Compositschicht mit einer äußeren PPA-Oberfläche besteht die zur ersten Compositschicht hin orientierte Schicht der Folie aus einer Formmasse, die mindestens 40 Gew.-% des gleichen PPA enthält. Daran schließt sich eine Haftvermittlerschicht aus einer Formmasse an, die mindestens 30 Gew.-% dieses PPA sowie mindestens 30 Gew.-% des damit zu verbindenden Polyamids enthält. Die zur zweiten Compositschicht hin orientierte Schicht besteht zu mindestens 50 Gew.-% aus dem gleichen Polyamid wie die Matrix der zweiten Compositschicht, beispielsweise PA11 oder PA12.
- Bei einer ersten Compositschicht mit einer äußeren PPS-Oberfläche besteht die zur ersten Compositschicht hin orientierte Schicht der Folie aus einer Formmasse, die zu mindestens 50 Gew.-% PPS enthält. Daran schließt sich eine Haftvermittlerschicht aus einer Formmasse an, die mindestens 50 Gew.-% PPS sowie 3 bis 30 Gew.-% eines säureanhydridgruppenhaltigen polyolefinischen Schlagzähmodifiers enthält, der auch Acrylatbausteine enthalten kann (Handelsname z. B. LOTADER®). Die zur zweiten Compositschicht hin orientierte Schicht besteht zu mindestens 50 Gew.-% aus dem gleichen Polyamid wie die Matrix der zweiten Compositschicht, beispielsweise PA11 oder PA12.
- Bei einer ersten Compositschicht mit einer äußeren PA11- oder PA12-Oberfläche besteht die zur ersten Compositschicht hin orientierte Schicht der Folie aus einer Formmasse, die zu mindestens 40 Gew.-% das gleiche Polyamid enthält. Daran schließt sich eine Haftvermittlerschicht aus einem säureanhydridfunktionalisierten Polyethylen (falls die Matrix der zweiten Compositschicht auf Polyethylen basiert) oder einem säureanhydridfunktionalisierten Polypropylen an (falls die Matrix der zweiten Compositschicht auf Polypropylen basiert). Die zur zweiten Compositschicht hin orientierte Schicht besteht zu mindestens 50 Gew.-% aus dem gleichen Polyethylen oder Polypropylen wie die Matrix der zweiten Compositschicht.
- Bei einer ersten Compositschicht mit einer äußeren PEEK-Oberfläche besteht die zur ersten Compositschicht hin orientierte Schicht der Folie aus einer Formmasse, die zu mindestens 40 Gew.-% PEEK enthält. Daran schließt sich eine Haftvermittlerschicht aus einer Formmasse an, die mindestens 50 Gew.-% eines Polyimids oder Polyetherimids enthält. Die zur zweiten Compositschicht hin orientierte Schicht besteht zu mindestens 50 Gew.-% aus dem gleichen PPA wie die Matrix der zweiten Compositschicht, wobei das PPA dieser Schicht vorzugsweise einen Überschuss an Aminoendgruppen zur Haftungsverbesserung enthält. Das PPA der Matrix der zweiten Compositschicht kann sich im Endgruppengehalt hiervon unterscheiden.

Die Gew.-%-Angaben in diesen Beispielen sind nur exemplarisch; sie können den allgemeinen Angaben in den Ansprüchen und der Beschreibung entsprechend variiert werden.

Bei der zweiten Ausführungsform werden der Liner und die erste Tapelage der ersten Compositschicht im Schritt d) ebenfalls durch eine entsprechende zwischengelegte Folie verbunden. Hier gelten die gleichen Ausführungen wie oben für die im Schritt f) aufgebrachte Folie; es sind nur die Begriffe "erste Compositschicht" durch "Liner", "Polymer B" durch "Polymer A", "Polymer C" durch "Polymer B" und "zweite Compositschicht" durch "erste Compositschicht" zu ersetzen.

Einschichtige Folien werden bei beiden Ausführungsformen auf bekannte Weise durch Extrusion hergestellt, mehrschichtige Folien auf ebenfalls bekannte Weise durch Coextrusion, Extrusionsbeschichten oder Laminieren.

Die aufzubringende Folie liegt in der Regel als Tape vor. Das Folientape wird spiralförmig um die erste Compositschicht beziehungsweise den Liner herum gewickelt, wobei der Winkel abhängig von der Tapebreite und dem Rohrdurchmesser ist. Es kommt nur darauf an, die äußere Oberfläche der ersten Compositschicht beziehungsweise des Liners weitgehend lückenlos und vorzugsweise praktisch vollständig lückenlos zu bedecken; der Wickelwinkel spielt grundsätzlich keine Rolle, solange eine faltenfreie Wicklung dieser Folienlage möglich ist. Vorteilhafterweise wird die Folie so gewickelt, dass es weder zu Überlappungen noch zu Spalten kommt. Geringe Überlappungen oder Spalten können aber eventuell toleriert werden. Das Wickeln erfolgt unter einem Anpressdruck, der durch die Wickelspannung oder durch eine Anpressvorrichtung erzeugt wird. Um die Zugfestigkeit der Folie zu erhöhen und damit ein Reißen der erweichten Folie beim Aufwickeln zu verhindern, können eine Folienschicht oder mehrere Folienschichten unidirektionale Verstärkungsfasern enthalten. Um die Haftung zu den angrenzenden Schichten nicht zu verschlechtern, empfiehlt es sich hier jedoch, den Fasergehalt nicht zu hoch zu wählen. Im Allgemeinen sind Fasergehalte im Bereich von 3 bis 20 Vol.-% ausreichend. Eine spezielle Ausführungsform hiervon ist eine Folie aus drei oder mehr Schichten, bei der die Mittelschicht (im Falle einer Dreischichtfolie) oder mindestens eine der mittleren Schichten (im Falle einer Folie aus mehr als drei Schichten) unidirektionale Verstärkungsfasern enthält. In diesem Fall kann der Fasergehalt beispielsweise im Bereich von 3 bis 40 Vol.-% liegen. Die unidirektionalen Verstärkungsfasern sind generell in Axialrichtung des Folientapes orientiert. Derartige Mehrschichtfolien, die eine faserverstärkte Schicht enthalten, können beispielsweise durch Laminieren der einzelnen Schichten, durch Aufextrudieren unverstärkter Schichten auf eine verstärkte Schicht oder durch Aufextrudieren von Formmassen auf eine gespreizte Faserlage hergestellt werden.

In einer möglichen Ausführungsform wird die bereitgestellte Folie direkt mit dem Tape der ersten Tapelage der nachfolgenden Compositschicht flächig verbunden; hierbei werden das Tape und die am entsprechenden Polymer reiche Seite der Folie miteinander verschweißt. Bei dieser Ausführungsform wird der Schritt d2) beziehungsweise der Schritt g) vorweggenommen. Ein Vorteil dieser Ausführungsform ist, dass die benötigte Wickelspannung nicht zum Reißen der Folie führen kann, da diese durch das Tape verstärkt ist. Ein derartiger Verbund lässt sich beispielsweise durch Laminieren von Tape und Folie herstellen.

Wichtig ist, dass beim Verschweißen von erster Compositschicht und Folie beziehungsweise von Liner und Folie beide Kontaktflächen geschmolzen werden. In einer Ausführungsform werden beide Kontaktflächen angeschmolzen, beispielsweise mittels Infrarotstrahlung, Heißluft, Heißgas, Laserstrahlung, Mikrowellenstrahlung oder direkt durch Kontaktheizung. Die angeschmolzenen Kontaktflächen werden dann aneinander gepresst, etwa mit Hilfe der Wickelspannung oder mittels eines Andruckkörpers, etwa eines Rollers oder einer Backe. Bis zum Erstarren der aufgeschmolzenen Bereiche sollte der Anpressdruck dann gehalten werden. In einer weiteren Ausführungsform wird die Folie aufgewickelt und dann von außen entweder indirekt oder aber direkt mittels eines beheizbaren Andruckkörpers aufgeschmolzen. Die Heizleistung muss so dosiert werden, dass hierbei auch die äußere Oberfläche der ersten Compositschicht beziehungsweise des Liners anschmilzt. Danach wird der Anpressdruck bis zum Erstarren der angeschmolzenen Bereiche aufrechterhalten. Dieses Verfahren kann mit Hilfe einer Wickelstation und einer anschließend folgenden Konsolidierungsstation durchgeführt werden, wie es beispielsweise in der WO 2012/118379 beschrieben ist.

Die Dicke der Folie muss ausreichend sein, um die Wickelkräfte aufnehmen zu können. Andererseits muss die Folie ausreichend biegsam sein. Die Folie hat in der Regel eine Dicke im Bereich von 0,1 bis 3 mm, vorzugsweise im Bereich von 0,3 bis 2 mm und besonders bevorzugt im Bereich von 0,5 bis 1,2 mm.

Im Schritt d2) beziehungsweise g) wird auf die so erhaltene Struktur beziehungsweise auf die an Polymer B [Schritt d2)] oder Polymer C [Schritt g)] reiche Oberfläche der Folie unter Anwendung eines Anpressdrucks das Tape aufgebracht. Der nötige Anpressdruck kann wie bei der Folie durch die Wickelspannung oder mittels eines Andruckkörpers erzielt werden. Auch hier werden in einer Ausführungsform beide Kontaktflächen angeschmolzen, beispielsweise mittels Infrarotstrahlung, Heißluft, Heißgas, Laserstrahlung, Mikrowellenstrahlung oder direkt durch Kontaktheizung. Die angeschmolzenen Kontaktflächen werden dann aneinander gepresst. Bis zum Erstarren der aufgeschmolzenen Bereiche sollte der Anpressdruck dann gehalten werden. In einer weiteren Ausführungsform wird das Tape aufgewickelt und dann von außen entweder indirekt oder aber direkt mittels eines beheizbaren Andruckkörpers aufgeschmolzen. Die Heizleistung muss so dosiert werden, dass hierbei auch die äußere Oberfläche der vorher aufgebrachten Folie anschmilzt. Danach wird der Anpressdruck bis zum Erstarren der angeschmolzenen Bereiche aufrechterhalten. Das Wickeln des Tapes sowie das Aufwickeln gegebenenfalls weiterer Tapelagen in den Schritten e) und h) ist Stand der Technik; eine genaue Beschreibung des Vorgehens ist daher unnötig. Wegen Einzelheiten sei auf den in der Beschreibungseinleitung genannten Stand der Technik verwiesen.

Falls von der Anwendung her gefordert, können auf den Schritt h) folgend eine oder mehrere weitere Compositschichten mit einer Matrix aus einer Formmasse auf Basis eines anderen Polymeren aufgebracht werden, sofern die stoffschlüssige Verbindung mit der vorhergehenden Compositschicht gewährleistet werden kann. Beispielsweise kann in gleicher Weise wie oben beschrieben die Haftung durch eine entsprechend aufgebaute Ein- oder Mehrschichtfolie erzeugt werden. Auch bei diesen weiteren Compositschichten beträgt der Volumenanteil der Verstärkungsfasern im Tape in der Regel 10 bis 85 %, vorzugsweise 15 bis 80 %, besonders bevorzugt 20 bis 75 % und insbesondere bevorzugt 25 bis 70 %, wobei die Fasern vorzugsweise als unidirektionale Faserlage vorliegen.

Um die äußere Compositschicht zu schützen, kann gegebenenfalls zum Abschluss eine an die Compositlage anschließende Schicht als außenliegende Decklage aus einer verstärkten oder unverstärkten polymeren Masse aufgebracht werden. Hierbei handelt es sich entweder um eine thermoplastische Formmasse oder um ein thermoplastisches oder vernetzbares oder vernetztes Elastomer. Vorzugsweise haftet die Decklage fest auf der äußeren Tapelage. Hierzu ist es vorteilhaft, das Material der Decklage so zu wählen, dass es mindestens 30 Gew.-% des gleichen Polymeren wie in der Matrix der äußeren Compositschicht oder eines hierzu kompatiblen Polymeren enthält. In diesem Fall kann die Decklage beispielsweise mittels eines Querspritz-Extrusionskopfes aufgebracht und so stoffschlüssig mit der äußeren Compositschicht verbunden werden. Basiert die Decklage jedoch auf einem Polymer, das mit dem Material der äußeren Compositschicht nicht kompatibel ist, so kann in gleicher Weise wie oben beschrieben die Haftung durch eine entsprechend aufgebaute Ein- oder Mehrschichtfolie erzeugt werden. Die Haftung kann auch durch Vernetzen eines vernetzbaren Elastomers erzeugt werden.

Gegenstand der Erfindung ist auch ein Thermoplastic Composite Pipe, das unter Verwendung des erfindungsgemäßen Verfahrens hergestellt werden kann. Es enthält, von innen nach außen, folgende Komponenten:
a) einen rohrförmigen Liner mit einer Wandung, die im Bereich der äußeren Oberfläche ein thermoplastisches Polymer A enthält,
b) nur falls Polymer A und Polymer B unterschiedlich sind, eine mit dem Liner direkt und stoffschlüssig verbundene Zwischenlage, bei der die Region der mit dem Liner verbundenen Kontaktfläche aus einer Formmasse besteht, die zu mindestens 30 Gew.-%, vorzugsweise zu mindestens 40 Gew.-%, besonders bevorzugt zu mindestens 50 Gew.-%, insbesondere bevorzugt zu mindestens 60 Gew.-% und ganz besonders bevorzugt zu mindestens 70 Gew.-% Polymer A enthält, und bei der die Region der gegenüberliegenden, mit der anschließenden ersten Compositschicht verbundenen Kontaktfläche aus einer Formmasse besteht, die zu mindestens 30 Gew.-%, vorzugsweise zu mindestens 40 Gew.-%, besonders bevorzugt zu mindestens 50 Gew.-%, insbesondere bevorzugt zu mindestens 60 Gew.-% und ganz besonders bevorzugt zu mindestens 70 Gew.-% ein thermoplastisches Polymer B enthält;
c) eine mit der äußeren Lineroberfläche beziehungsweise der Zwischenlage direkt und stoffschlüssig verbundene erste Compositschicht, die Verstärkungsfasern in einer Matrix enthält, welche Polymer B enthält,
d) eine mit der ersten Compositschicht direkt und stoffschlüssig verbundene Zwischenlage, bei der die Region der mit der ersten Compositschicht verbundenen Kontaktfläche aus einer Formmasse besteht, die zu mindestens 30 Gew.-%, vorzugsweise zu mindestens 40 Gew.-%, besonders bevorzugt zu mindestens 50 Gew.-%, insbesondere bevorzugt zu mindestens 60 Gew.-% und ganz besonders bevorzugt zu mindestens 70 Gew.-% Polymer B enthält, und wobei die Region der gegenüberliegenden, mit der zweiten Compositschicht verbundenen Kontaktfläche aus einer Formmasse besteht, die zu mindestens 30 Gew.-%, vorzugsweise zu mindestens 40 Gew.-%, besonders bevorzugt zu mindestens 50 Gew.-%, insbesondere bevorzugt zu mindestens 60 Gew.-% und ganz besonders bevorzugt zu mindestens 70 Gew.-% Polymer C enthält;
e) eine mit dieser Zwischenlage direkt und stoffschlüssig verbundene zweite Compositschicht, die Verstärkungsfasern in einer Matrix enthält, welche Polymer C enthält,
f) gegebenenfalls eine außenliegende Decklage aus einer polymeren Masse,
wobei Polymer A und Polymer B gleich oder unterschiedlich sind und Polymer B und Polymer C unterschiedlich sind.

Vorzugsweise besteht das Thermoplastic Composite Pipe aus den Komponenten a), c) bis e) beziehungsweise a), c) bis f) (erste Ausführungsform) oder aus den Komponenten a) bis e) beziehungsweise a) bis f) (zweite Ausführungsform).

Die einzelnen Ausgestaltungen dieses Thermoplastic Composite Pipe ergeben sich aus den obigen Angaben zum Herstellungsverfahren.

Beim erfindungsgemäßen Verfahren wird durch Verbund von gleichen Polymeren im kritischen Prozessschritt eine bessere Haftungsgüte erreicht. Daneben können einschichtige Linerrohre eingesetzt werden. Vorhandene Großrohr-Extrusionsanlagen können daher ohne Umbau weiter genutzt werden. Gleichzeitig können für die Matrix der Compositlage oder der zweiten Compositschicht preiswertere oder anwendungstechnisch günstigere Polymere als das Polymer des Liners gewählt werden.

Das erfindungsgemäße Rohr eignet sich insbesondere für Offshoreanwendungen in der Öl- oder Gasförderung, etwa zum Transport der Produkte zu Plattformen, zum Anschluss an Stahlleitungen, als Transportleitung und insbesondere beispielsweise als Umbilical, als Riser, als Jumper Line, als Flowline, als Intervention Line, als Downline, als Injektionsleitung oder als Druckleitung. Die Verwendung für den Transport von gegebenenfalls unter Druck stehenden Kohlenwasserstoffen oder deren Gemischen wie Rohöl, Rohgas, Triphase (also Öl-Gas-Wassergemisch), Processed Oil (schon teilweise am Meeresgrund aufgearbeitet), Processed Gas, Benzin oder Diesel, von Injektionsmedien wie Wasser (etwa zur Erhaltung des Drucks in der Kaverne), Ölfeldchemikalien, Methanol oder CO₂ sowie zur Führung von Hydraulikölen (beispielsweise für Aktoren am Meeresgrund) ist ebenfalls Gegenstand der Erfindung. Darüber hinaus ist das erfindungsgemäße Rohr auch als druckführende Leitung im Onshore-Bereich oder in anderen industriellen Anwendungen geeignet, insbesondere in solchen, in denen höhere Kräfte in Axialrichtung des Rohres kraftschlüssig zwischen Rohr und Anbindungselement übertragen werden müssen.

## Patentansprüche

1. Verfahren zur Herstellung eines Thermoplastic Composite Pipes, das folgende Schritte enthält:
a) ein rohrförmiger Liner mit einer Wandung, die im Bereich der äußeren Oberfläche ein thermoplastisches Polymer A enthält, wird bereitgestellt;
b) ein Tape, das Verstärkungsfasern in einer Matrix enthält, welche ein thermoplastisches Polymer B enthält, wird bereitgestellt;
c) ein Tape, das Verstärkungsfasern in einer Matrix enthält, welche ein thermoplastisches Polymer C enthält, wird bereitgestellt;
wobei Polymer A und Polymer B gleich oder unterschiedlich sind und Polymer B und Polymer C unterschiedlich sind;
d) auf den rohrförmigen Liner wird ein unter Schritt b) bereitgestelltes Tape mittels Verschweißen aufgebracht;
e) gegebenenfalls werden auf die im Schritt d) aufgebrachte Tapelage weitere Tapelagen gleicher Art stoffschlüssig aufgebracht;
f) auf die so gebildete erste Compositschicht wird eine erste Folie oder ein im Schritt g) hergestellter Verbund aus einer ersten Folie und einem unter Schritt c) bereitgestellten Tape aufgebracht, wobei entweder vorher, gleichzeitig oder anschließend die äußere Oberfläche der ersten Compositschicht sowie die Kontaktoberfläche der ersten Folie geschmolzen wird;
g) auf die äußere Oberfläche der ersten Folie wird das unter Schritt c) bereitgestellte Tape aufgebracht, wobei entweder vorher, gleichzeitig oder anschließend die äußere Oberfläche der aufgebrachten ersten Folie sowie die Kontaktoberfläche des Tapes geschmolzen wird;
h) gegebenenfalls werden auf die im Schritt g) aufgebrachte Tapelage weitere Tapelagen gleicher Art stoffschlüssig aufgebracht;
wobei in den Schritten g) und gegebenenfalls h) die zweite Compositschicht erzeugt wird;
i) gegebenenfalls wird zum Abschluss eine außenliegende Decklage aus einer polymeren Masse aufgebracht;
wobei die Oberfläche der ersten Folie, die in Kontakt mit der ersten Compositschicht gebracht wird, aus einer Formmasse besteht, die zu mindestens 30 Gew.-% Polymer B enthält, und die gegenüberliegende Oberfläche der ersten Folie aus einer Formmasse besteht, die zu mindestens 30 Gew.-% Polymer C enthält.

2. Verfahren gemäß Anspruch 1,
**dadurch gekennzeichnet,**
**dass** die erste Folie und das im Schritt c) bereitgestellte Tape vor dem Schritt f) miteinander flächig so verbunden werden, dass das Tape und die an Polymer C reiche Seite der ersten Folie miteinander verschweißt sind.

3. Verfahren gemäß einem der vorhergehenden Ansprüche,
**dadurch gekennzeichnet,**
**dass** Polymer A und das Polymer B unterschiedlich sind und der Schritt d) aus folgenden Teilschritten besteht:
d1) auf den rohrförmigen Liner wird eine zweite Folie oder ein im Schritt d2) hergestellter Verbund aus einer zweiten Folie und einem unter Schritt b) bereitgestellten Tape aufgebracht, wobei entweder vorher, gleichzeitig oder anschließend die äußere Oberfläche des Liners sowie die Kontaktoberfläche der zweiten Folie geschmolzen wird;
d2) auf die äußere Oberfläche der zweiten Folie wird das unter Schritt b) bereitgestellte Tape aufgebracht, wobei entweder vorher, gleichzeitig oder anschließend die äußere Oberfläche der aufgebrachten zweiten Folie sowie die Kontaktoberfläche des Tapes geschmolzen wird;
wobei die Oberfläche der zweiten Folie, die in Kontakt mit dem Liner gebracht wird, aus einer Formmasse besteht, die zu mindestens 30 Gew.-% Polymer A enthält, und die gegenüberliegende Oberfläche der zweiten Folie aus einer Formmasse besteht, die zu mindestens 30 Gew.-% Polymer B enthält.

4. Verfahren gemäß einem der vorhergehenden Ansprüche,
**dadurch gekennzeichnet,**
**dass** zum Abschluss eine außenliegende Decklage aus einer polymeren Masse aufgebacht wird.

5. Verfahren gemäß einem der vorhergehenden Ansprüche,
**dadurch gekennzeichnet,**
**dass** die erste Folie sowie die gegebenenfalls verwendete zweite Folie aus zwei, drei oder mehr Schichten besteht, die stoffschlüssig miteinander verbunden sind.

6. Verfahren gemäß einem der vorhergehenden Ansprüche,
**dadurch gekennzeichnet,**
**dass** mindestens eine Schicht der der ersten beziehungsweise der zweiten Folie unidirektionale Verstärkungsfasern enthält.

7. Verfahren gemäß einem der vorhergehenden Ansprüche,
**dadurch gekennzeichnet,**
**dass** das Polymer A des Liners ausgewählt ist aus der Gruppe Polyolefin, Polyamid, Polyphthalamid, Polyethylennaphthalat, Polybutylennaphthalat, Fluorpolymer, Polyphenylensulfid, Polyethersulfon, Polyphenylsulfon und Polyarylenetherketon.

8. Verfahren gemäß einem der vorhergehenden Ansprüche,
**dadurch gekennzeichnet,**
**dass** das Polymer B des im Schritt b) bereitgestellten Tapes ausgewählt ist aus der Gruppe Polyolefin, Polyamid, Polyphthalamid, Polyethylennaphthalat, Polybutylennaphthalat, Fluorpolymer, Polyphenylensulfid, Polyethersulfon, Polyphenylsulfon und Polyarylenetherketon.

9. Verfahren gemäß einem der vorhergehenden Ansprüche,
**dadurch gekennzeichnet,**
**dass** das Polymer C des im Schritt c) bereitgestellten Tapes ausgewählt ist aus der Gruppe Polyolefin, Polyamid, Polyphthalamid, Polyethylennaphthalat, Polybutylennaphthalat, Fluorpolymer, Polyphenylensulfid, Polyethersulfon, Polyphenylsulfon und Polyarylenetherketon.

10. Verfahren gemäß einem der vorhergehenden Ansprüche,
**dadurch gekennzeichnet,**
**dass** die Faserverstärkung des im Schritt b) beziehungsweise im Schritt c) bereitgestellten Tapes als unidirektionale Faserlage vorliegt.

11. Verfahren gemäß einem der vorhergehenden Ansprüche,
**dadurch gekennzeichnet, dass** der Faseranteil des im Schritt b) beziehungsweise im Schritt c) bereitgestellten Tapes 10 bis 85 Vol.-% beträgt.

12. Verfahren gemäß einem der vorhergehenden Ansprüche, **dadurch gekennzeichnet, dass** die Fasern des im Schritt b) beziehungsweise im Schritt c) bereitgestellten Tapes ausgewählt sind aus der Gruppe Glasfasern, Carbonfasern, Aramidfasern, Borfasern, keramische Fasern, Basaltfasern, Siliciumcarbidfasern, Polyamidfasern, Polyesterfasern, Fasern aus flüssigkristallinem Polyester, Polyacrylnitrilfasern sowie Fasern aus Polyimid, Polyetherimid, Polyphenylensulfid, Polyetherketon oder Polyetheretherketon.

13. Thermoplastic Composite Pipe, das von innen nach außen folgende Komponenten enthält:
a) einen rohrförmigen Liner mit einer Wandung, die im Bereich der äußeren Oberfläche ein thermoplastisches Polymer A enthält;
b) nur falls Polymer A und Polymer B unterschiedlich sind, eine mit dem Liner direkt und stoffschlüssig verbundene Zwischenlage, bei der die Region der mit dem Liner verbundenen Kontaktfläche aus einer Formmasse besteht, die zu mindestens 30 Gew.-% Polymer A enthält, und bei der die Region der gegenüberliegenden, mit der anschließenden ersten Compositschicht verbundenen Kontaktfläche aus einer Formmasse besteht, die zu mindestens 30 Gew.-% ein thermoplastisches Polymer B enthält;
c) eine mit der äußeren Lineroberfläche beziehungsweise der Zwischenlage direkt und stoffschlüssig verbundene erste Compositschicht, die Verstärkungsfasern in einer Matrix enthält, welche Polymer B enthält;
d) eine mit der ersten Compositschicht direkt und stoffschlüssig verbundene Zwischenlage, bei der die Region der mit der ersten Compositschicht verbundenen Kontaktfläche aus einer Formmasse besteht, die zu mindestens 30 Gew.-% Polymer B enthält, und wobei die Region der gegenüberliegenden, mit der zweiten Compositschicht verbundenen Kontaktfläche aus einer Formmasse besteht, die zu mindestens 30 Gew.-% Polymer C enthält;
e) eine mit dieser Zwischenlage direkt und stoffschlüssig verbundene zweite Compositschicht, die Verstärkungsfasern in einer Matrix enthält, welche Polymer C enthält;
f) gegebenenfalls eine außenliegende Decklage aus einer polymeren Masse;
wobei Polymer A und Polymer B gleich oder unterschiedlich sind und Polymer B und Polymer C unterschiedlich sind.

14. Thermoplastic Composite Pipe gemäß Anspruch 13,
**dadurch gekennzeichnet,**
**dass** es ein Umbilical, ein Riser, eine Jumper Line, eine Flowline, eine Intervention Line, eine Downline, eine Injektionsleitung oder eine Druckleitung ist.

15. Verwendung des Thermoplastic Composite Pipes gemäß einem der Ansprüche 13 und 14 für den Transport von Rohöl, Rohgas, Triphase, Processed Oil, Processed Gas, Benzin, Diesel oder Injektionsmedien oder zur Führung von Hydraulikölen.

## Claims

1. Process for producing a thermoplastic composite pipe, comprising the following steps:
a)providing a tubular liner having a wall comprising a thermoplastic polymer A in the region of the outer surface;
b)providing a tape comprising reinforcing fibres in a matrix comprising a thermoplastic polymer B;
c)providing a tape comprising reinforcing fibres in a matrix comprising a thermoplastic polymer C;
where polymer A and polymer B are the same or different and polymer B and polymer C are different;
d)applying a tape provided in step b) to the tubular liner by means of welding;
e)optionally cohesively bonding further tape laminas of the same kind to the tape lamina applied in step d) ;
f)applying a first film or a composite which is produced in step g) and is composed of a first film and a tape provided in step c) to the first composite layer thus formed, with melting of the outer surface of the first composite layer and of the contact surface of the first film either beforehand, simultaneously or thereafter;
g)applying the tape provided in step c) to the outer surface of the first film, with melting of the outer surface of the first film applied and of the contact surface of the tape either beforehand, simultaneously or thereafter;
h)optionally cohesively bonding further tape laminas of the same kind to the tape lamina applied in step g);
where the second composite layer is produced in steps g) and optionally h);
i) optionally finally applying an outer cover lamina composed of a polymeric material;
wherein the surface of the first film which is brought into contact with the first composite layer consists of a moulding compound comprising polymer B to an extent of at least 30% by weight, and the opposite surface of the first film consists of a moulding compound comprising polymer C to an extent of at least 30% by weight.

2. Process according to Claim 1,
**characterized in that**
the first film and the tape provided in step c), prior to step f), are bonded to one another over an area such that the tape and the side of the first film that is rich in polymer C are welded to one another.

3. Process according to either of the preceding claims,
**characterized in that**
polymer A and polymer B are different and step d) consists of the following components steps:
d1) applying a second film or a composite which is produced in step d2) and is composed of a second film and a tape provided in step b) to the tubular liner, with melting of the outer surface of the liner and of the contact surface of the second film either beforehand, simultaneously or thereafter;
d2) applying the tape provided in step b) to the outer surface of the second film, with melting of the outer surface of the second film applied and of the contact surface of the tape either beforehand, simultaneously or thereafter;
where the surface of the second film which is brought into contact with the liner consists of a moulding compound comprising polymer A to an extent of at least 30% by weight, and the opposite surface of the second film consists of a moulding compound comprising polymer B to an extent of at least 30% by weight.

4. Process according to any of the preceding claims,
**characterized in that**
an outer cover lamina of a polymeric material is finally applied.

5. Process according to any of the preceding claims,
**characterized in that**
the first film and any second film used consist of two, three or more layers cohesively bonded to one another.

6. Process according to any of the preceding claims,
**characterized in that**
at least one layer of the first or second film comprises unidirectional reinforcing fibres.

7. Process according to any of the preceding claims,
**characterized in that**
the polymer A of the liner is selected from the group of polyolefin, polyamide, polyphthalamide, polyethylene naphthalate, polybutylene naphthalate, fluoropolymer, polyphenylene sulphide, polyether sulphone, polyphenyl sulphone and polyarylene ether ketone.

8. Process according to any of the preceding claims,
**characterized in that**
the polymer B of the tape provided in step b) is selected from the group of polyolefin, polyamide, polyphthalamide, polyethylene naphthalate, polybutylene naphthalate, fluoropolymer, polyphenylene sulphide, polyether sulphone, polyphenyl sulphone and polyarylene ether ketone.

9. Process according to any of the preceding claims,
**characterized in that**
the polymer C of the tape provided in step c) is selected from the group of polyolefin, polyamide, polyphthalamide, polyethylene naphthalate, polybutylene naphthalate, fluoropolymer, polyphenylene sulphide, polyether sulphone, polyphenyl sulphone and polyarylene ether ketone.

10. Process according to any of the preceding claims,
**characterized in that**
the fibre reinforcement of the tape provided in step b) and/or in step c) takes the form of a unidirectional fibre lamina.

11. Process according to any of the preceding claims, **characterized in that** the fibre component of the tape provided in step b) or step c) is 10% to 85% by volume.

12. Process according to any of the preceding claims, **characterized in that** the fibres of the tape provided in step b) or step c) are selected from the group of glass fibres, carbon fibres, aramid fibres, boron fibres, ceramic fibres, basalt fibres, silicon carbide fibres, polyamide fibres, polyester fibres, fibres of liquid-crystalline polyester, polyacrylonitrile fibres and fibres of polyimide, polyetherimide, polyphenylene sulphide, polyether ketone or polyether ether ketone.

13. Thermoplastic composite pipe comprising the following components from the inside outward:
a)a tubular liner having a wall comprising a thermoplastic polymer A in the region of the outer surface;
b) only if polymer A and polymer B are different, an intermediate lamina which is directly and cohesively bonded to the liner and in which the region of the contact area bonded to the liner consists of a moulding compound comprising polymer A to an extent of at least 30% by weight, and in which the region of the opposite contact area bonded to the subsequent first composite layer consists of a moulding compound comprising a thermoplastic polymer B to an extent of at least 30% by weight;
c)a first composite layer which is directly and cohesively bonded to the outer liner surface or to the intermediate lamina and comprises reinforcing fibres in a matrix comprising polymer B;
d)an intermediate lamina which is directly and cohesively bonded to the first composite layer and in which the region of the contact area bonded to the first composite layer consists of a moulding compound comprising polymer B to an extent of at least 30% by weight, and where the region of the opposite contact area bonded to the second composite layer consists of a moulding compound comprising polymer C to an extent of at least 30% by weight;
e)a second composite layer which is directly and cohesively bonded to this intermediate lamina and comprises reinforcing fibres in a matrix comprising polymer C;
f)optionally an outer cover lamina composed of a polymeric material;
where polymer A and polymer B are the same or different and polymer B and polymer C are different.

14. Thermoplastic composite pipe according to Claim 13,
**characterized in that**
it is an umbilical, a riser, a jumper line, a flowline, an intervention line, a downline, an injection line or a pressure line.

15. Use of the thermoplastic composite pipe according to either of Claims 13 and 14 for the transport of crude oil, crude gas, triphase, processed oil, processed gas, gasoline, diesel or injection media, or for conduction of hydraulic oils.

## Revendications

1. Procédé de fabrication d'un tuyau composite thermoplastique, contenant les étapes suivantes :
a) on prépare une gaine en forme de tuyau avec une paroi qui contient un polymère thermoplastique A dans le domaine de sa surface externe ;
b) on prépare une bande contenant des fibres de renfort dans une matrice qui contient un polymère thermoplastique B ;
c) on prépare une bande contenant des fibres de renfort dans une matrice qui contient un polymère thermoplastique C ;
le polymère A et le polymère B étant identiques ou différents, le polymère B et le polymère C étant différents ;
d) on applique une bande préparée à l'étape b) sur la gaine en forme de tuyau par soudure ;
e) éventuellement, on applique sur la couche de bande appliquée à l'étape d) d'autres couches de bande du même type par accouplement de matière ;
f) on applique sur la première couche composite ainsi formée une première feuille ou un composé fabriqué à l'étape g) d'une première feuille et une bande préparée à l'étape c), la surface externe de la première couche composite ainsi que la surface de contact de la première feuille étant fondues soit préalablement, soit simultanément, soit ensuite ;
g) on applique sur la surface externe de la première feuille la bande préparée à l'étape c), la surface externe de la première couche composite ainsi que la surface de contact de la première feuille étant fondues soit préalablement, soit simultanément, soit ensuite ;
h) éventuellement, on applique sur la couche de bande appliquée à l'étape g) d'autres couches de bande du même type par accouplement de matière ;
la deuxième couche composite étant fabriquée aux étapes g) et éventuellement h) ;
i) enfin, éventuellement, on applique une couche de couverture externe constituée d'une masse polymère ;
la surface de la première feuille qui est appliquée en contact avec la première couche composite étant constituée d'une masse à mouler qui contient au moins 30 % en poids de polymère B, et la surface opposée de la première feuille étant constituée d'une masse à mouler qui contient au moins 30 % en poids de polymère C.

2. Procédé selon la revendication 1, **caractérisé en ce que** la première feuille et la bande préparée à l'étape c) sont liées entre elles avant l'étape f) sur toute leur surface, de sorte que la bande et la face riche en polymère C de la première feuille soient soudées l'une à l'autre.

3. Procédé selon l'une des revendications précédentes, **caractérisé en ce que** le polymère A et le polymère B sont différents et **en ce que** l'étape d) se compose des sous-étapes suivantes :
d1) on applique sur la gaine en forme de tuyau une deuxième feuille ou un composé fabriqué à l'étape d2) à partir d'une deuxième feuille et d'une bande préparée à l'étape b), la surface externe de la gaine ainsi que la surface de contact de la deuxième feuille étant fondues soit préalablement, soit simultanément, soit ensuite ;
d2) on applique sur la surface externe de la deuxième feuille la bande préparée à l'étape b), la surface externe de la deuxième feuille appliquée ainsi que la surface de contact de la bande étant fondues soit préalablement, soit simultanément, soit ensuite ;
la surface de la deuxième feuille, qui est appliquée en contact avec la gaine, étant constituée d'une masse à mouler qui contient au moins 30 % en poids de polymère A, et la surface opposée de la deuxième feuille étant constituée d'une masse à mouler qui contient au moins 30 % en poids de polymère B.

4. Procédé selon l'une des revendications précédentes, **caractérisé en ce qu'**on applique à la fin une couche de couverture externe constituée d'une masse polymère.

5. Procédé selon l'une des revendications précédentes, **caractérisé en ce que** la première feuille, ainsi éventuellement que la deuxième feuille utilisée, se composent de deux ou trois feuilles ou plus, qui sont liées ensemble par accouplement de matière.

6. Procédé selon l'une des revendications précédentes, **caractérisé en ce qu'**au moins une couche de la première ou respectivement de la deuxième feuille contient des fibres de renfort unidirectionnelles.

7. Procédé selon l'une des revendications précédentes, **caractérisé en ce que** le polymère A de la gaine est choisi dans le groupe constitué de polyoléfine, polyamide, polyphtalamide, polyéthylène naphtalate, polybutylène naphtalate, fluoropolymère, polysulfure de phénylène, polyéthersulfone, polyphénylsulfone et polyarylènéthercétone.

8. Procédé selon l'une des revendications précédentes, **caractérisé en ce que** le polymère B de la bande préparée à l'étape b) est choisi dans le groupe constitué de polyoléfine, polyamide, polyphtalamide, polyéthylène naphtalate, polybutylène naphtalate, fluoropolymère, polysulfure de phénylène, polyéthersulfone, polyphénylsulfone et polyarylènéthercétone.

9. Procédé selon l'une des revendications précédentes, **caractérisé en ce que** le polymère C de la bande préparée à l'étape c) est choisi dans le groupe constitué de polyoléfine, polyamide, polyphtalamide, polyéthylène naphtalate, polybutylène naphtalate, fluoropolymère, polysulfure de phénylène, polyéthersulfone, polyphénylsulfone et polyarylènéthercétone.

10. Procédé selon l'une des revendications précédentes, **caractérisé en ce que** le renfort de fibres de la bande préparée à l'étape b) ou respectivement à l'étape c) se présente sous forme d'une couche de fibre unidirectionnelle.

11. Procédé selon l'une des revendications précédentes, **caractérisé en ce que** la teneur en fibres de la bande préparée à l'étape b) ou respectivement à l'étape c) est de 10 à 85 % en volume.

12. Procédé selon l'une des revendications précédentes, **caractérisé en ce que** les fibres de la bande préparée à l'étape b) ou respectivement à l'étape c) sont choisies dans le groupe de fibres de verre, fibres de carbone, fibres d'aramide, fibres de bore, fibres céramiques, fibres de basalte, fibres de carbure de silicium, fibres de polyamide, fibres de polyester, fibres de polyester en cristaux liquides, fibres de polyacrylonitrile, ainsi que fibres de polyimide, polyétherimide, polysulfure de phénylène, polyéthercétone ou polyétheréthercétone.

13. Tuyau composite thermoplastique contenant, de l'intérieur vers l'extérieur, les composants suivants :
a) une gaine en forme de tuyau avec une paroi qui contient un polymère thermoplastique A dans le domaine de sa surface externe ;
b) seulement dans le cas où le polymère A et le polymère B sont différents, une couche intermédiaire liée directement et par accouplement de matière avec la gaine, dans laquelle la région de la surface de contact liée à la gaine se compose d'une masse à mouler contenant au moins 30 % en poids de polymère A, et dans laquelle la région de la surface opposée de la surface de contact liée à la première couche composite adjacente se compose d'une masse à mouler contenant au moins 30 % en poids d'un polymère thermoplastique B ;
c) une première couche composite liée directement et par accouplement de matière à la surface externe de la gaine ou respectivement à la couche intermédiaire, contenant des fibres de renfort dans une matrice qui contient du polymère B ;
d) une couche intermédiaire liée directement et par accouplement de matière à la première couche composite, dans laquelle la région de la surface de contact liée à la première couche composite se compose d'une masse à mouler contenant au moins 30 % en poids de polymère B, et la région de la surface de contact liée à la deuxième couche composite opposée de la première feuille se compose d'une masse à mouler contenant au moins 30 % en poids de polymère C ;
e) une deuxième couche composite liée directement et par accouplement de matière à cette couche intermédiaire, qui contient des fibres de renfort dans une matrice contenant du polymère C ;
f) éventuellement, une couche de couverture constituée d'une masse polymère ;
le polymère A et le polymère B étant identiques ou différents, le polymère B et le polymère C étant différents.

14. Tuyau composite thermoplastique selon la revendication 13, **caractérisé en ce qu'**il est un câble ombilical, un riser, un câble volant, une conduite, une ligne d'intervention, une liaison descendante, une conduite d'injection ou une conduite sous pression.

15. Utilisation du tuyau composite thermoplastique selon une des revendications 13 et 14 pour le transport de pétrole brut, de gaz naturel, de mélange triphasique, de pétrole raffiné, de gaz naturel raffiné, d'essence, de diesel ou de milieux d'injection ou pour l'acheminement d'huiles hydrauliques.
